# EUROPEAN PATENT SPECIFICATION

(11) **EP 2 727 954 B1**
(45) Date of publication and mention of the grant of the patent: **14.03.2018**
(21) Application number: 12803529.2
(22) Date of filing: 24.05.2012
(51) Int. Cl.: C08J 7/04, B32B 27/36

(54) **COATING FILM**
BESCHICHTUNGSFILM
FILM DE REVÊTEMENT

(30) Priority: 30.06.2011 JP 2011145057; 24.10.2011 JP 2011232351
(43) Date of publication of application: 07.05.2014
(73) Proprietor: Mitsubishi Chemical Corporation, Tokyo (JP)
(72) Inventor: KAWASAKI, Taishi, Maibara-shi Shiga 521-0234 (JP); KIMURA, Hidetaka, Maibara-shi Shiga 521-0234 (JP); KATO, Yuzo, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2012/063327
(87) International publication number: WO 2013/001947

(56) References cited:
- EP-A1- 2 256 151
- JP-A- 1 218 832
- JP-A- 5 202 209
- JP-A- 11 077 877

## Description

### TECHNICAL FIELD

The present invention relates to a coated film, and more particularly, to a coated film which is suitably used as a member for a prism sheet or a microlens used in a backlight unit of liquid crystal displays, etc., and has a good adhesion property to various functional layers. Meanwhile, a microlens sheet or a prism sheet comprising a transparent film and an optical functional layer formed on the transparent film which scatters or converges a light transmitted therethrough, for example, such as a microlens layer or a prism layer, is generally referred to as an optical functional film. One typical example of "functional layers" described in the present invention is the optical functional layer in the optical functional film.

### BACKGROUND ART

In recent years, liquid crystal displays have been extensively used as a display device for TVs, personal computers, digital cameras, cellular phones, etc. The liquid crystal displays have no light-emitting function by themselves. Therefore, liquid crystal displays of such a type that light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed from a reflection sheet, a light guide plate, a light diffusion sheet and a prism sheet which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is then entered into the prism sheet disposed next to the light diffusion sheet. In the prism sheet, the light entered thereinto is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer may be further provided as an intermediate layer between the polyester film as the base material and the prism layer in order to enhance adhesion therebetween. It is known that the easy-bonding coating layer is formed of, for example, a polyester resin, an acrylic resin or a urethane resin (Patent Documents 1 to 3).

The prism layer may be produced, for example, by the following method. That is, an active energy ray-curable coating material is charged into a prism mold, and then a polyester film is placed on the coating material thus charged so as to interpose the coating material between the polyester film and the mold. Next, an active energy ray is irradiated to the active energy ray-curable coating material to cure the resin, and then the mold is removed from the cured resin, thereby obtaining the prism layer formed on the polyester film. In such a method, in order to form an accurate prism pattern on the prism layer, it is required to use a solvent-free type active energy ray-curable resin. However, the solvent-free type resin tends to be deteriorated in penetration into an easy-bonding layer laminated on the polyester film and swelling effect therein as compared to a solvent type resin and, therefore, tends to be insufficient in adhesion to the polyester film. In order to improve the adhesion property, a coating layer comprising a specific urethane resin has been proposed. However, even such a coating layer may still fail to exhibit a sufficient adhesion property to the solvent-free type resin (Patent Document 4).

In order to improve an adhesion property to the solvent-free type resin, there has been proposed a coating layer comprising a urethane resin and an oxazoline compound as main components (Patent Document 5). However, the coating layer tends to be still insufficient in adhesion property to a prism resin being adaptable for high-brightness prisms that can meet the current requirements such as reduction in number of backlight elements and suppression of a power consumption therefor, i.e., a high-refractive index prism resin.

### CITATION LIST

### PATENT LITERATURE

Patent Document 1: Japanese Patent Application Laid-Open (KOKAI) No. 8-281890
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 2-158633
Patent Document 5: Japanese Patent Application Laid-Open (KOKAI) No. 2010-13550
EP2256151 discloses a polyester film coated with a vinyl group-containing polyurethane resin, whereon a topcoat agent is applied of a solvent-free active energy radiation-curing resin. The content of the vinyl group in the PU is between 1 and 50 mol based on 100 mol of a urethane bond of the polyurethane. The radicals generated upon radiation-curing of the topcoat resin layer also act on the vinyl group-containing polyurethane resin coating layer, so that the vinyl group in the polyurethane coating layer is chemically bonded to the topcoat agent. The coated polyester film can be used as optical film such as a diffusion sheet and a prism sheet.

### SUMMARY OF THE INVENTION

### Problems to be Solved by the Invention

The present invention has been accomplished in view of the above conventional problems. An object of the present invention is to provide a coated film which can exhibit a good adhesion property to various solvent-free type resins, and can be suitably used, for example, as a member for a prism sheet or a microlens employed in a backlight unit for liquid crystal displays, etc.

### Means for Solving Problems

As a result of the present inventors' earnest study in view of the above problems, it has been found that the above problems can be readily solved by using a coated film having a specific structure. The present invention has been attained on the basis of this finding.

That is, in a first aspect of the present invention, there is provided a coated film comprising a polyester film and a coating layer formed on at least one surface of the polyester film which is prepared from a coating solution comprising a polyurethane resin comprising a carbon-carbon double bond moiety which is at least one group selected from the group consisting of an acrylate group and a methacrylate group in an amount of not less than 0.5% by weight based on a total weight of the polyurethane resin, in which the coated film is used for forming, on a surface of the coating layer, a functional layer prepared from a solvent-free type active energy ray-curable coating material, and the carbon-carbon double bond moiety in the coating layer is capable of reacting with a carbon-carbon double bond in a compound constituting the functional layer, wherein the film thickness of the coating layer is in the range of 0.002 to 0.5 µm.

### EFFECT OF THE INVENTION

In accordance with the present invention, it is possible to provide a coated film having an excellent adhesion property to various functional layers such as a prism layer and a microlens layer. Therefore, the present invention has a high industrial value.

### PREFERRED EMBODIMENTS FOR CARRYING OUT THE INVENTION

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester for the polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known catalysts may be used as the polymerization catalyst. Examples of the polymerization catalyst include an antimony compound, a titanium compound, a germanium compound, a manganese compound, an aluminum compound, a magnesium compound and a calcium compound. Among these compounds, in particular, from the standpoint of a high brightness of the resulting film, preferred is the titanium compound.

The polyester film may also comprise an ultraviolet absorber in order to improve a weathering resistance of the film and prevent deterioration of liquid crystals and the like. The ultraviolet absorber is not particularly limited as long as it is a compound that is capable of absorbing an ultraviolet ray and can withstand heat applied during a process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the main purposes of imparting an easy-slipping property to the film and preventing occurrence of flaws in the film in the respective steps, particles may be blended in the polyester film. The kind of particles to be blended in the polyester film is not particularly limited, and any particles may be used as long as the particles are capable of imparting a good easy-slipping property to the film. Specific examples of the particles include inorganic particles such as silica, calcium carbonate, magnesium carbonate, barium carbonate, calcium sulfate, calcium phosphate, magnesium phosphate, kaolin, aluminum oxide and titanium oxide, and organic particles such as acrylic reins, styrene resins, urea resins, phenol resins, epoxy resins and benzoguanamine resins, etc. Further, there may also be used deposited particles obtained by precipitating and finely dispersing a part of metal compounds such as a catalyst during the process for production of the polyester.

The shape of the particles used in the polyester film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the above particles is usually in the range of 0.01 to 5 *µ*m and preferably 0.01 to 3 *µ*m. When the average particle diameter of the particles is less than 0.01 *µ*m, the particles may fail to impart an easy-slipping property to the polyester film, or tend to be aggregated together and therefore exhibit a poor dispersibility therein, which will cause deterioration in transparency of the resulting film. On the other hand, when the average particle diameter of the particles is more than 5 *µ*m, the obtained film tends to have an excessively coarse surface roughness, thereby causing problems in the subsequent steps upon applying a functional layer or the like on the polyester film.

The content of the particles in the polyester layer is usually less than 5% by weight and preferably 0.0003 to 3% by weight. When the polyester layer comprises no particles or a less amount of the particles, although the resulting film has a high transparency and therefore provides a good film, the film tends to be insufficient in slipping property. Therefore, in such a case, it is required to take a measure for enhancing a slipping property, for example, by incorporating particles in a coating layer formed thereon, etc. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the above polyester film may also comprise, in addition to the above particles, known additives such as an antioxidant, an antistatic agent, a thermal stabilizer, a lubricant, a dye, a pigment, etc., if required.

The thickness of the polyester film (in the form of a single layer film or a multilayer film) is not particularly limited, and the polyester film may have any thickness as long as it can be produced while maintaining a suitable film shape. The thickness of the polyester film is usually in the range of 10 to 350 *µ*m and preferably 50 to 300 *µ*m.

Next, an example of the process of producing the polyester film used in the present invention is more specifically explained, although the present invention is not particularly limited thereto. That is, in the production process, there is preferably used such a method in which the above-mentioned raw polyester material is extruded from a die in the form of a molten sheet, and the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the draw ratio in each of the two directions finally falls within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film according to the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. Among these methods, the in-line coating method is preferably used because the coating layer can be produced simultaneously with formation of the polyester film and therefore at low costs.

For example, in the case of a sequential biaxial drawing process, the in-line coating treatment may be carried out, in particular, after completion of the longitudinal drawing but before initiation of the lateral drawing, although the present invention is not particularly limited thereto. When the coating layer is formed on the polyester film by the in-line coating method, the coating can be carried out simultaneously with formation of the polyester film, and the coating layer can be treated at a high temperature when subjecting the drawn polyester film to the heat-setting step, so that the resulting coated film can be enhanced in performance such as an adhesion property to various functional layers to be formed on the coating layer as well as a wet heat resistance of the resulting film, etc. Also, when the coating step is conducted before drawing the polyester film, the thickness of the coating layer may be changed by adjusting a draw ratio of the film, so that the thin-film coating step can be more easily conducted as compared to the off-line coating method. Thus, by using the in-line coating method, in particular, by conducting the in-line coating method before the drawing, it is possible to produce a film suitable as the polyester film used in the present invention.

The coated film according to the present invention is characterized by comprising a polyester film and a coating layer formed on at least one surface of the polyester film which is prepared from a coating solution comprising a polyurethane resin comprising a carbon-carbon double bond moiety in an amount of not less than 0.5% by weight based on a total weight of the polyurethane resin. The above polyurethane resin is hereinafter referred to merely as a "specific polyurethane resin".

The coating layer used in the present invention is capable of enhancing an adhesion property to various functional layers, in particular, improving an adhesion property to a solvent-free type active energy ray-curable layer, for example, to form a prism layer or a microlens layer. In particular, the coating layer can be adapted for enhancing an adhesion property to a high-refractive index prism layer or microlens layer which aims at providing a high-brightness prism and tends to be deteriorated in adhesion to the coating layer.

The mechanism for enhancing the adhesion property is estimated as follow. That is, when irradiating an ultraviolet light upon forming the prism layer or microlens layer, a carbon-carbon double bond in the coating layer is reacted with a carbon-carbon double bond in a compound used for forming the prism layer or microlens layer to form a covalent bond therebetween.

The specific polyurethane resin used for forming the coating layer is such a polyurethane resin having a carbon-carbon double bond in which a weight of the carbon moiety as the carbon-carbon double bond is not less than 0.5% by weight based on a total weight of the polyurethane resin. As the material for forming the carbon-carbon double bond, there may be used any conventionally known materials as long as they are capable of reacting with the carbon-carbon double bond contained in the compound forming the functional layer such as a prism layer or a microlens layer. A carbon-carbon double bond moiety which is at least one group selected from the group consisting of an acrylate group and a methacrylate group is introduced into the polyurethane resin.

Various substituent groups may be introduced into the carbon-carbon double bond. Examples of the substituent groups include an alkyl group such as a methyl group and an ethyl group, a phenyl group, a halogen group, an ester group, an amide group, and a structure such as a conjugated double bond. The amount of the substituent groups introduced is not particularly limited, and the substituent groups may be introduced in the form of a mono-substituted group, a di-substituted group, a tri-substituted group or a tetra-substituted group. In view of a good reactivity, among these groups, preferred are a mono-substituted group and a di-substituted group, and more preferred is a mono-substituted group.

In view of easiness of introducing the carbon-carbon double bond into the polyurethane resin and a good reactivity with the carbon-carbon double bond contained in the compound forming the prism layer or microlens layer, a unsubstituted acrylate group or methacrylate group is preferred, and an unsubstituted acrylate group is more preferred.

In addition, the proportion of the carbon-carbon double bond moiety to a total amount of the resin is required to be not less than 0.5% by weight, and is preferably not less than 1.0% by weight and more preferably not less than 1.5% by weight. When the proportion of the carbon-carbon double bond moiety to a total amount of the resin is less than 0.5% by weight, the resulting coating layer tends to be insufficient in adhesion to the prism layer or microlens layer, in particular, to the layer having a high refractive index.

The polyurethane resin is usually produced by the reaction between a polyol and an isocyanate. Examples of the polyol include polyester polyols, polycarbonate polyols, polyether polyols, polyolefin polyols and acrylic polyols. These compounds may be used alone or in combination of any two or more thereof.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds having a derivative unit of a lactone compound such as polycaprolactone.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyether polyols include polyethylene glycol, polypropylene glycol, polyethylene/propylene glycol, polytetramethylene ether glycol and polyhexamethylene ether glycol.

In order to enhance adhesion to various overcoat layers, among the above polyols, preferred are polyester polyols and polycarbonate polyols, and more preferred are polyester polyols.

Examples of a polyisocyanate compound used for producing the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α' ,α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof. These polyisocyanate compounds may be in the form of a dimer, a trimer such as typically an isocyanuric ring, or a tetramer or higher polymer.

When the urethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resin used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the urethane resins by suitably adjusting an amount of the diol component charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

Upon forming the coating layer, in order to improve a coating appearance of the obtained layer and enhance a transparency and an adhesion property thereof, various polymers may be used in combination with the polyurethane resin.

Specific examples of the various polymers include polyurethane resins having no carbon-carbon double bond, polyester resins, acrylic resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc. Among these polymers, in view of good adhesion to the functional layers such as a prism layer and a microlens layer, preferred are polyester resins, acrylic resins and polyurethane resins, more preferred are polyurethane resins, still more preferred are polycarbonate-based polyurethane resins and polyester-based polyurethane resins, and further still more preferred are polycarbonate-based polyurethane resins.

Also, upon forming the coating layer, for the purposes of increasing a coating film strength of the obtained coating layer, allowing the coating layer to exhibit a sufficient adhesion property to a prism layer or a microlens layer, and enhancing a wet heat resistance, etc., of the resulting film, it is preferred that the coating layer further comprises a crosslinking agent.

Examples of the crosslinking agent include an oxazoline compound, an epoxy compound, a melamine compound, an isocyanate compound, a carbodiimide compound and a silane coupling compound. Among these compounds, in view of enhancing an adhesion property of the coating layer, preferred are an oxazoline compound and an epoxy compound, and more preferred is a combination an oxazoline compound and an epoxy compound because the adhesion property can be remarkably enhanced.

Examples of the oxazoline compound include polymers having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

Examples of the epoxy compound include condensates of epichlorohydrin with a hydroxyl group of ethylene glycol, polyethylene glycol, glycerol, polyglycerol, bisphenol A, etc., or an amino group. Examples of the epoxy compound include polyepoxy compounds, diepoxy compounds, monoepoxy compounds and glycidyl amine compounds. Specific examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Specific examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compounds include allyl glycidyl ether, 2-ethylhexyl glycidyl ether and phenyl glycidyl ether. Specific examples of the glycidyl amine compounds include N,N,N',N'-tetraglycidyl-m-xylylenediamine and 1,3-bis(N,N-diglycidylamino)cyclohexane.

Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be in the form of either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound.

The isocyanate-based compound means an isocyanate or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α' ,α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds of these isocyanates. These isocyanates may be used alone or in combination of any two or more thereof. Among these isocyanates, from the viewpoint of preventing occurrence of yellowing owing to ultraviolet radiation, aliphatic isocyanates and alicyclic isocyanates are more suitably used as compared to aromatic isocyanates.

When the isocyanate compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the above isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving a dispersibility or a crosslinking reactivity of the isocyanate-based compounds.

The carbodiimide-based compound is used, in particular, for enhancing an adhesion property of the coating layer, etc. The preferred carbodiimide-based compound includes a polycarbodiimide compound comprising two or more carbodiimide structures or carbodiimide derivative structures in a molecule thereof.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve a water solubility or a water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

Also, in order to improve a slipping property and an anti-blocking property of the film, particles are preferably used in the coating layer upon forming the coating layer.

The average particle diameter of the particles is usually not more than 1.0 *µ*m, preferably not more than 0.5 *µ*m and more preferably not more than 0.2 *µ*m from the viewpoint of a good transparency of the resulting film.

Examples of the particles used in the coating layer include inorganic particles such as silica, alumina and metal oxides, and organic particles such as crosslinked polymer particles. In particular, from the viewpoints of a good dispersibility in the coating layer and a good transparency of the resulting coating film, silica particles are preferably used.

Further, the coating layer may also comprise various additives such as a defoaming agent, a coatability improver, a thickening agent, an organic lubricant, an antistatic agent, an ultraviolet absorber, an antioxidant, a foaming agent and a dye, if required, unless the subject matter of the present invention is adversely affected by the addition thereof.

The content of the specific polyurethane resin in the coating solution is usually 20 to 90% by weight, preferably 30 to 85% by weight and more preferably 45 to 80% by weight based on a total amount of non-volatile components in the coating solution. However, in the case where the specific polyurethane resin is used in combination with the other polymer, the content of the specific polyurethane resin in the coating solution may be reduced. In such a case, the total amount of the specific polyurethane resin and the other polymer is usually 20 to 90% by weight, preferably 30 to 85% by weight and more preferably 45 to 80% by weight. In the mixture of the specific polyurethane resin and the other polymer, the content of the specific polyurethane resin is usually 5 to 85% by weight, preferably 10 to 70% by weight and more preferably 15 to 60% by weight. When the content of the specific polyurethane resin in the coating solution is out of the above-specified range, the resulting coating layer tends to be insufficient in adhesion property to the prism layer or microlens layer.

Also, the content of the crosslinking agent in the coating solution is usually 5 to 80% by weight, preferably 10 to 60% by weight and more preferably 20 to 50% by weight based on a total amount of non-volatile components in the coating solution. When the content of the crosslinking agent in the coating solution is out of the above-specified range, the resulting coating layer tends to be insufficient in wet heat resistance or adhesion property.

In addition, the content of the particles in the coating solution is not specifically limited because the slipping property and anti-blocking property of the resulting film tend to vary depending upon a particle diameter of the particles and properties of the polyester film, and is usually 0.1 to 25% by weight, preferably 3 to 15% by weight and more preferably 5 to 10% by weight. When the content of the particles in the coating solution is more than 25% by weight, the resulting coating layer tends to be deteriorated in transparency or adhesion property.

The coated film according to the present invention may also be provided, on its surface opposed to the surface on which the above coating layer is formed, with an additional coating layer. For examples, in the case where a functional layer such as an anti-sticking layer, a light diffusion layer and a hard coat layer is to be formed on the surface of the polyester film which is opposed to the surface on which the prism layer or microlens layer is formed, the coating layer formed on the opposite surface of the polyester film is capable of enhancing an adhesion property to the functional layer. The coating layer formed on the opposite surface of the polyester film may comprise conventionally known components, for example, a polymer such as polyester resins, acrylic resins and urethane resins, a crosslinking agent such as an oxazoline compound, an epoxy compound, a melamine compound, an isocyanate-based compound and a carbodiimide-based compound, etc. These components or materials may be used alone or in combination of any two or more thereof. In addition, the coating layer formed on the opposite surface of the polyester film may be the above coating layer formed from the above polyurethane resin having a carbon-carbon double bond (i.e., the same coating layer may be formed on both side surfaces of the polyester film).

The analysis of the components contained in the coating layer may be conducted, for example, by analysis method such as TOF-SIMS, ESCA and fluorescent X-ray.

When forming the coating layer by the in-line coating method, the coated film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

The film thickness of the coating layer is usually in the range of 0.002 to 0.5 *µ*m, preferably 0.005 to 0.5 *µ*m, more preferably 0.01 to 0.2 *µ*m and still more preferably 0.01 to 0.1 *µ*m. When the film thickness of the coating layer is out of the above-specified range, the resulting coating layer tends to be deteriorated in adhesion property, coating appearance and anti-blocking property.

As the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the coated film of the present invention may be previously subjected to surface treatments such as corona treatment and plasma treatment.

The coating layer of the coated film according to the present invention is generally provided thereon with a prism layer or a microlens layer in order to improve a brightness of the film. In particular, it is possible to provide a high-refractive index resin layer required to attain a high brightness to which it is difficult for the coating layer to ensure a good adhesion property. In recent years, in order to efficiently enhance a brightness of films, there have been proposed prism layers with various shapes. In general, the prism layers have plural rows of prisms each having a triangular sectional shape which are arranged in parallel with each other. Also, there have been proposed microlens layers with various shapes. In general, the microlens layers have a structure in which a number of semispherical convex lenses are provided on a film. Both of the prism layer and the microlens layer may respectively have any conventionally known shapes.

The prism layer may have, for example, such a shape in which a thickness of the layer is 10 to 500 *µ*m, rows of prisms have a pitch of 10 to 500 *µ*m, and respective prisms have a triangular sectional shape having an apex angle of 40° to 100°. As the material of the prism layer, there may be used conventionally known materials. Examples of the material of the prism layer include active energy ray-curable resins such as, typically, (meth)acrylate-based resins. Examples of the general compounds constituting the above resins include polyhydric alcohol components such as ethylene glycol, propylene glycol, tetramethylene glycol and hexamethylene glycol, and (meth)acrylate-based compounds having a bisphenol A structure, a urethane structure, a polyester structure, an epoxy structure, etc.

As the method for formulating the high-refractive index resins required to achieve a high brightness of the film, there may be mentioned methods in which a compound having many aromatic structures, a sulfur atom, a halogen atom and a metal compound are used in addition to the above general compounds. Among these methods, from the standpoint of a uniform refractive index of the prism layer or the microlens layer and from the environmental viewpoints, preferred are the methods using the compound having many aromatic structures or a sulfur atom.

Examples of the compound having many aromatic structures include compounds having a condensed polycyclic aromatic structure such as naphthalene, anthracene, phenanthrene, naphthacene, benzo[a]anthracene, benzo[a]phenanthrene, pyrene, benzo[c]phenanthrene and perylene; compounds having a biphenyl structure; and compounds having a fluorene structure.

The microlens layer may have, for example, such a shape in which a thickness of the layer is 10 to 500 *µ*m, and respective lenses have a semispherical shape having a diameter of 10 to 500 *µ*m. The shape of each lens of the microlens layer may also be a conical shape or a pyramidal shape. As the material of the microlens layer, conventionally known materials may be used therefor similarly to the prism layer.

### EXAMPLES

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi High-Technologies Corp.; accelerated voltage: 100 V), the coating layer was observed to measure particle diameters of 10 particles therein and calculate an average particle diameter thereof from the measured ten values.

### (3) Weight of carbon-carbon bond moiety in polyurethane resin:

After drying the polyurethane resin under reduced pressure, the polyurethane resin was measured using NMR ("AVANCE III 600" manufactured by Bruker Biospin K.K.) to determine respective peaks belonging to ¹H and ¹³C and thereby calculate a weight of the carbon-carbon bond moiety.

### (4) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.; accelerated voltage: 100 V). The measurement of the thickness was conducted at 10 positions of the coating layer, and an average value of the thus measured 10 thickness values was defined as a thickness of the coating layer.

### (5) Method for evaluation of adhesion property:

A composition comprising 50 parts by weight of ethylene glycol-modified bisphenol A acrylate (number of ethylene glycol chains: 8), 27 parts by weight of 4,4'-(9-fluorenylidene) bis(2-phenoxyethyl acrylate), 20 parts by weight of 2-biphenoxyethyl acrylate and 3 parts by weight of diphenyl(2,4,6-trimethylbenzoyl)phosphine oxide was placed in a mold for forming a prism layer in which plural rows of prism-shaped mold cavities each having an apex angle of 65° were arranged with a pitch of 50 *µ*m in parallel with each other. Then, the coated film was overlapped on the resin in the mold such that the coating layer of the coated film came into contact with the resin. The composition was uniformly spread using a roller, and then an ultraviolet ray was irradiated thereover using an ultraviolet irradiation apparatus to cure the resin. Next, the resulting film was released from the mold to obtain a film on which the prism layer was formed. The thus obtained film was allowed to stand under environmental conditions of 60°C and 90% RH for 24 hr. Thereafter, the prism layer was subjected to crosscutting to form 100 (10 x 10) cross-cuts thereon. A 18 mm-wide tape ("Cellotape (registered trademark) CT-18" produced by Nichiban Co., Ltd.) was attached onto the thus cross-cut prism layer, and then rapidly peeled off therefrom at a peel angle of 180°. Then, the surface of the prism layer from which the tape was peeled off was observed to measure an area of the layer peeled off together with the tape. The evaluation ratings are as follows.
A: Peeled area of the layer was less than 5%.
B: Peeled area of the layer was not less than 5% but less than 20%.
C: Peeled area of the layer was not less than 20% but less than 50%.
D: Peeled area of the layer was not less than 50%.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester as produced, were subjected to esterification reaction at 225°C in a nitrogen atmosphere. Successively, orthophosphoric cid and germanium dioxide in amounts of 3500 ppm and 70 ppm, respectively, based on the polyester as produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

The same procedure as used in the above method for producing the polyester (A) was conducted except that silica particles having an average particle diameter of 2 *µ*m were added in an amount of 0.3 part by weight before the melt-polycondensation, thereby obtaining a polyester (C).

The compounds constituting the coating layer are as follows.

### (Examples of compounds)

### •Polyurethane resin having a carbon-carbon double bond (IA):

Polyurethane resin comprising a carbon-carbon double bond moiety formed of a hydroxyethyl acrylate unit: a dicyclohexylmethane diisocyanate unit: a hexamethylene diisocyanate trimer unit: a caprolactone unit: an ethylene glycol unit: a dimethylol propanoic acid unit = 18:12:22:26:18:4 (mol%) in an amount of 2.0% by weight.

### •Polyurethane resin having a carbon-carbon double bond moiety (IB):

Polyurethane resin comprising a carbon-carbon double bond moiety formed of a hydroxyethyl acrylate unit: a dicyclohexylmethane diisocyanate unit: a hexamethylene diisocyanate trimer unit: a caprolactone unit: an ethylene glycol unit: a dimethylol propanoic acid unit = 23:12:22:24:15:4 (mol%) in an amount of 2.6% by weight.

### •Polyurethane resin having a carbon-carbon double bond moiety (IC):

Polyurethane resin comprising a carbon-carbon double bond moiety formed of a hydroxyethyl acrylate unit: a dicyclohexylmethane diisocyanate unit: a hexamethylene diisocyanate trimer unit: a caprolactone unit: an ethylene glycol unit: a dimethylol propanoic acid unit = 8:10:20:38:20:4 (mol%) in an amount of 1.0% by weight.

### •Polyurethane resin having a carbon-carbon double bond moiety (ID):

Polyurethane resin comprising a carbon-carbon double bond moiety formed of a hydroxyethyl acrylate unit: a dicyclohexylmethane diisocyanate unit: a hexamethylene diisocyanate trimer unit: a caprolactone unit: an ethylene glycol unit: a dimethylol propanoic acid unit = 6:10:20:38:22:4 (mol%) in an amount of 0.7% by weight.

### •Polyurethane resin having a carbon-carbon double bond moiety (IE):

Polyurethane resin comprising a carbon-carbon double bond moiety formed of a hydroxyethyl acrylate unit: a dicyclohexylmethane diisocyanate unit: a hexamethylene diisocyanate trimer unit: a caprolactone unit: an ethylene glycol unit: a dimethylol propanoic acid unit = 2:10:17:43:24:4 (mol%) in an amount of 0.3% by weight.

### •Urethane resin having no carbon-carbon double bond moiety (IF):

Water dispersion obtained by neutralizing a urethane resin produced from 80 parts by weight of a polycarbonate polyol having a number-average molecular weight of 2000 which was obtained from 1,6-hexanediol and diethyl carbonate, 4 parts by weight of polyethylene glycol having a number-average molecular weight of 400, 12 parts by weight of methylene-bis(4-cyclohexyl isocyanate) and 4 parts by weight of dimethylol butanoic acid, with triethylamine.

### •Oxazoline compound (IIA):

Acrylic polymer having an oxazoline group and a polyalkyleneoxide chain "EPOCROSS WS-500" (produced by Nippon Shokubai Co., Ltd.; polymer comprising 1-methoxy-2-propanol solvent in an amount of about 38% by weight).

### •Epoxy compound (IIB):

Polyglycerol polyglycidyl ether "DECONAL EX-521" (produced by Nagase Chemtex Co., Ltd.)

### •Particles (III):

Silica sol having an average particle diameter of 0.07 *µ*m

### Example 1:

A mixed raw material obtained by mixing the polyesters (A), (B) and (C) in amounts of 89%, 5% and 6%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 1:18:1 as output), followed by cooling and solidifying the thus extruded sheet on the chilled roll, thereby obtaining an undrawn sheet. Next, the thus obtained undrawn sheet was drawn utilizing a difference between peripheral speeds of rolls at 85°C at a draw ratio of 3.4 times in a longitudinal direction thereof. Thereafter, a coating solution A1 shown in the below-mentioned Table 1 was applied on both surfaces of the thus obtained longitudinally drawn sheet. Then, the resulting coated sheet was introduced into a tenter where the sheet was drawn at 120°C at a draw ratio of 4.0 times in a lateral direction thereof and then heat-set at 225°C. Next, the obtained drawn sheet was relaxed by 2% in a lateral direction thereof, thereby obtaining a polyester film having a thickness of 125 *µ*m which was provided on both surfaces thereof with a coating layer having a thickness of 0.03 *µ*m (after dried). As a result of evaluating the thus obtained coated film, it was confirmed that the film exhibited a good adhesion property to a prism layer. The properties of the film are shown in Table 2.

### Examples 2 to 17:

The same procedure as in Example 1 was conducted except that the coating agent composition was changed to those shown in Table 1, thereby obtaining coated films. The properties of the thus obtained coated films are shown in Table 2. As a result, it was confirmed that the coated films exhibited a good adhesion property.

### Comparative Examples 1 and 2:

The same procedure as in Example 1 was conducted except that the coating agent composition was changed to those shown in Table 1, thereby obtaining polyester films. The results of evaluation of the thus obtained coated films are as shown in Table 2, namely, it was confirmed that the coated films had a poor adhesion property.

**Table 1**

| Coating solutions | Coating agent composition (wt%) | | | | | | | | |
|---|---|---|---|---|---|---|---|---|---|
| | IA | IB | IC | ID | IE | IF | IIA | IIB | III |
| 1 | 60 | 0 | 0 | 0 | 0 | 0 | 17 | 17 | 6 |
| 2 | 60 | 0 | 0 | 0 | 0 | 0 | 20 | 15 | 5 |
| 3 | 60 | 0 | 0 | 0 | 0 | 0 | 15 | 20 | 5 |
| 4 | 75 | 0 | 0 | 0 | 0 | 0 | 10 | 10 | 5 |
| 5 | 50 | 0 | 0 | 0 | 0 | 0 | 25 | 20 | 5 |
| 6 | 85 | 0 | 0 | 0 | 0 | 0 | 5 | 5 | 5 |
| 7 | 40 | 0 | 0 | 0 | 0 | 0 | 30 | 25 | 5 |
| 8 | 0 | 60 | 0 | 0 | 0 | 0 | 17 | 17 | 6 |
| 9 | 0 | 0 | 60 | 0 | 0 | 0 | 17 | 17 | 6 |
| 10 | 0 | 0 | 0 | 60 | 0 | 0 | 17 | 17 | 6 |
| 11 | 50 | 0 | 0 | 0 | 0 | 10 | 17 | 17 | 6 |
| 12 | 30 | 0 | 0 | 0 | 0 | 30 | 17 | 17 | 6 |
| 13 | 20 | 0 | 0 | 0 | 0 | 40 | 17 | 17 | 6 |
| 14 | 10 | 0 | 0 | 0 | 0 | 50 | 17 | 17 | 6 |
| 15 | 0 | 0 | 0 | 0 | 0 | 60 | 17 | 17 | 6 |
| 16 | 0 | 0 | 0 | 0 | 60 | 0 | 17 | 17 | 6 |

**Table 2**

| Examples and Comp. Examples | Coating solution | Thickness (*µ*m) | Adhesion property |
|---|---|---|---|
| Example 1 | 1 | 0.03 | A |
| Example 2 | 1 | 0.01 | A |
| Example 3 | 1 | 0.05 | A |
| Example 4 | 1 | 0.10 | A |
| Example 5 | 2 | 0.03 | A |
| Example 6 | 3 | 0.03 | A |
| Example 7 | 4 | 0.03 | A |
| Example 8 | 5 | 0.03 | A |
| Example 9 | 6 | 0.03 | B |
| Example 10 | 7 | 0.03 | B |
| Example 11 | 8 | 0.03 | A |
| Example 12 | 9 | 0.03 | A |
| Example 13 | 10 | 0.03 | B |
| Example 14 | 11 | 0.03 | A |
| Example 15 | 12 | 0.03 | A |
| Example 16 | 13 | 0.03 | A |
| Example 17 | 14 | 0.03 | B |
| Comp. Example 1 | 15 | 0.03 | C |
| Comp. Example 2 | 16 | 0.03 | C |

### INDUSTRIAL APPLICABILITY

The coated film of the present invention can be suitably used in the applications in which a good adhesion property to a prism layer or a microlens layer is required, such as, for example, a backlight unit for liquid crystal displays, etc.

## Claims

1. A coated film comprising a polyester film and a coating layer formed on at least one surface of the polyester film which is prepared from a coating solution comprising a polyurethane resin comprising a carbon-carbon double bond moiety which is at least one group selected from the group consisting of an acrylate group and a methacrylate group in an amount of not less than 0.5% by weight based on a total weight of the polyurethane resin, in which the coated film is used for forming, on a surface of the coating layer, a functional layer prepared from a solvent-free type active energy ray-curable coating material, and the carbon-carbon double bond moiety in the coating layer is capable of reacting with a carbon-carbon double bond in a compound constituting the functional layer, wherein the film thickness of the coating layer is in the range of 0.002 to 0.5 µm.

2. The coated film according to claim 1, wherein the functional layer is an optical functional layer.

3. The coated film according to claim 2, wherein the optical functional layer is a microlens layer or a prism layer.

## Patentansprüche

1. Beschichteter Film, umfassend einen Polyesterfilm und eine Überzugsschicht, gebildet auf mindestens einer Oberfläche des Polyesterfilms, welche hergestellt wird aus einer Beschichtungslösung, umfassend ein Polyurethanharz, umfassend eine Kohlenstoff-Kohlenstoff-Doppelbindungseinheit, welche mindestens eine Gruppe ist, gewählt aus der Gruppe, bestehend aus einer Acrylatgruppe und einer Methacrylatgruppe, in einer Menge von nicht weniger als 0,5 Gew.-%, basierend auf dem Gesamtgewicht des Polyurethanharzes, wobei der beschichtete Film verwendet wird zur Bildung, auf einer Oberfläche der Überzugsschicht, einer funktionellen Schicht, hergestellt aus einem durch aktive Energiestrahlung vom lösungsmittelfreien Typ härtbaren Beschichtungsmaterial, und die Kohlenstoff-Kohlenstoff-Doppelbindungseinheit in der Überzugsschicht in der Lage ist, mit einer Kohlenstoff-Kohlenstoff-Doppelbindung in einer Verbindung, welche die funktionelle Schicht aufbaut, zu reagieren, wobei die Filmdicke der Überzugsschicht im Bereich von 0,002 bis 0,5 µm liegt.

2. Beschichteter Film nach Anspruch 1, wobei die funktionelle Schicht eine optisch funktionelle Schicht ist.

3. Beschichteter Film nach Anspruch 2, wobei die optisch funktionelle Schicht eine Mikrolinsenschicht oder eine Prismenschicht ist.

## Revendications

1. Un film enduit comprenant un film de polyester et une couche de revêtement formée sur au moins une surface du film de polyester préparé à partir d'une solution de revêtement comprenant une résine de polyuréthanne comprenant un groupement à double liaison de carbone-carbone qui est au moins un groupe choisi parmi le groupe constitué par un groupe acrylate et un groupe méthacrylate en une quantité non inférieure à 0,5% poids sur la base du poids total de la résine de polyuréthane, dans lequel le film de revêtu est utilisé pour former, sur une surface de la couche de revêtement, une couche fonctionnelle préparée à partir d'un matériau de revêtement durcissable par rayons d'énergie active de type sans solvant, et le groupement à double liaison de carbone-carbone dans la couche de revêtement est capable de réagir avec une double liaison de carbone-carbone dans un composé constituant la couche fonctionnelle, dans lequel l'épaisseur du film de la couche de revêtement est dans la plage de 0,002 à 0,5 µm.

2. Le film revêtu selon la revendication 1, dans lequel la couche fonctionnelle est une couche fonctionnelle optique.

3. Le film revêtu selon la revendication 2, dans lequel la couche fonctionnelle optique est une couche de microlentille ou une couche de prisme.
